# FASCICULE DE BREVET EUROPEEN

(11) **EP 3 554 237 B1**
(45) Date de publication et mention de la délivrance du brevet: **31.03.2021**
(21) Numéro de dépôt: 17825590.7
(22) Date de dépôt: 15.12.2017
(51) Int. Cl.: A01N 37/02, A01N 35/02, A01N 31/02, A01P 19/00, A01P 7/02, A01M 1/10, A01M 1/14, A01M 1/02

(54) **COMPOSITION ANTI-ACARIENS**
AKARIZIDE ZUSAMMENSETZUNG
ACARICIDAL COMPOSITION

(30) Priorité: 15.12.2016 FR 1662502
(43) Date de publication de la demande: 23.10.2019
(73) Titulaire: Université Paul-Valery Montpellier 3, 34090 Montpellier (FR); Université de Montpellier, 34090 Montpellier (FR); Centre National de la Recherche Scientifique, 75794 Paris Cedex 16 (FR); Axlr, Satt Du Languedoc Roussillon, 34090 Montpellier (FR)
(72) Inventeur: ROY, Lise, 34000 Montpellier (FR); ARRIAGA-JIMENEZ, Alfonsina, 34070 Montpellier (FR); EL ADOUZI, Marine, 34090 Montpellier (FR)
(74) Mandataire: LLR
(86) Numéro de dépôt international: PCT/FR2017/053611
(87) Numéro de publication internationale: WO 2018/109417

(56) Documents cités:
- WO-A1-93/11667
- WO-A1-2004/095927
- WO-A1-2013/050967
- WO-A2-2010/121142
- WO-A2-2010/130990
- WO-A2-2010/143752
- WO-A2-2014/028835
- GB-A- 2 388 544
- JP-A- 2002 308 706
- US-A1- 2006 204 531
- US-A1- 2009 235 949
- DATABASE WPI Week 200459 Thomson Scientific, London, GB; AN 2004-607398 XP002772689, -& JP 2004 231582 A (KAO CORP) 19 août 2004 (2004-08-19)
- DATABASE WPI Week 200705 Thomson Scientific, London, GB; AN 2007-037815 XP002772690, -& JP 2006 327957 A (KAO CORP) 7 décembre 2006 (2006-12-07)
- DATABASE CAPLUS [Online] CHEMICAL ABSTRACTS SERVICE, COLUMBUS, OHIO, US; NCHU, F. ET AL: "The use of a semiochemical bait to enhance exposure of Amblyomma variegatum (Acari: Ixodidae) to Metarhizium anisopliae (Ascomycota: Hypocreales)", XP002772691, extrait de STN Database accession no. 2009:255618 & NCHU, F. ET AL: "The use of a semiochemical bait to enhance exposure of Amblyomma variegatum (Acari: Ixodidae) to Metarhizium anisopliae (Ascomycota: Hypocreales)", VETERINARY PARASITOLOGY , 160(3-4), 279-284 CODEN: VPARDI; ISSN: 0304-4017, 2009, DOI: 10.1016/J.VETPAR.2008.11.005 10.1016/J.VETPAR.2008.11.005
- DATABASE CAPLUS [Online] CHEMICAL ABSTRACTS SERVICE, COLUMBUS, OHIO, US; TKACHEV, ALEXEY V. ET AL: "Chemical composition of lipophilic compounds from the body surface of unfed adult Ixodes persulcatus ticks (acari: Ixodidae)", XP002772692, extrait de STN Database accession no. 2000:572916 & TKACHEV, ALEXEY V. ET AL: "Chemical composition of lipophilic compounds from the body surface of unfed adult Ixodes persulcatus ticks (acari: Ixodidae)", EXPERIMENTAL AND APPLIED ACAROLOGY , 24(2), 145-158 CODEN: EAACEM; ISSN: 0168-8162, 2000,
- DATABASE CAPLUS [Online] CHEMICAL ABSTRACTS SERVICE, COLUMBUS, OHIO, US; KUWABARA, YASUMASA ET AL: "Control of acarids by acaricides, acarid attractants, and capturing devices", XP002772693, extrait de STN Database accession no. 1995:248662 & JP H06 256109 A (EARTH CHEMICAL CO) 13 septembre 1994 (1994-09-13)
- DATABASE CAPLUS [Online] CHEMICAL ABSTRACTS SERVICE, COLUMBUS, OHIO, US; YUNKER, C. E. ET AL: "Olfactory responses of adult Amblyomma hebraeum and A. variegatum (Acari: Ixodidae) to attractant chemicals in laboratory tests", XP002772694, extrait de STN Database accession no. 1992:464791 & YUNKER, C. E. ET AL: "Olfactory responses of adult Amblyomma hebraeum and A. variegatum (Acari: Ixodidae) to attractant chemicals in laboratory tests", EXPERIMENTAL AND APPLIED ACAROLOGY , 13(4), 295-301 CODEN: EAACEM; ISSN: 0168-8162, 1992, DOI: 10.1007/BF01195086 10.1007/BF01195086
- DATABASE CAPLUS [Online] CHEMICAL ABSTRACTS SERVICE, COLUMBUS, OHIO, US; RODRIGUEZ, J. G.: "Inhibition of acarid mite development by fatty acids", XP002772695, extrait de STN Database accession no. 1975:492301 & RODRIGUEZ, J. G.: "Inhibition of acarid mite development by fatty acids", INSECT MITE NUTR.: SIGNIFICANCE IMPLIC. ECOL. PEST MANAGE., TOP. PAP. INT. CONF. , 637-50. EDITOR(S): RODRIGUEZ, J. G. PUBLISHER: NORTH-HOLLAND, AMSTERDAM, NETH. CODEN: 30PLAH, 1972,
- DATABASE CAPLUS [Online] CHEMICAL ABSTRACTS SERVICE, COLUMBUS, OHIO, US; DOUGLAS, HECTOR D.: "Colonial seabird's paralytic perfume slows lice down: An opportunity for parasite-mediated selection?", XP002772696, extrait de STN Database accession no. 2013:278944 & DOUGLAS, HECTOR D.: "Colonial seabird's paralytic perfume slows lice down: An opportunity for parasite-mediated selection?", INTERNATIONAL JOURNAL FOR PARASITOLOGY , 43(5), 399-407 CODEN: IJPYBT; ISSN: 0020-7519, 2013, DOI: 10.1016/J.IJPARA.2013.01.004 10.1016/J.IJPARA.2013.01.004
- DATABASE CAPLUS [Online] CHEMICAL ABSTRACTS SERVICE, COLUMBUS, OHIO, US; YANG, JI-YEON ET AL: "Acaricidal activities of the active component of Lycopus lucidus oil and its derivatives against house dust and stored food mites (Arachnida: Acari)", XP002772697, extrait de STN Database accession no. 2012:341443 & YANG, JI-YEON ET AL: "Acaricidal activities of the active component of Lycopus lucidus oil and its derivatives against house dust and stored food mites (Arachnida: Acari)", PEST MANAGEMENT SCIENCE , 68(4), 564-572 CODEN: PMSCFC; ISSN: 1526-498X, 2012, DOI: 10.1002/PS.2295 10.1002/PS.2295
- DATABASE CAPLUS [Online] CHEMICAL ABSTRACTS SERVICE, COLUMBUS, OHIO, US; VANHAELEN, M. ET AL: "Occurrence in mushrooms (Homobasidiomycetes) of cis- and trans-octa-1,5-dien-3-ol, attractants to the cheese mite Tyrophagus putrescentiae (Schrank) (Acarina, Acaridae)", XP002772698, extrait de STN Database accession no. 1980:194513 & VANHAELEN, M. ET AL: "Occurrence in mushrooms (Homobasidiomycetes) of cis- and trans-octa-1,5-dien-3-ol, attractants to the cheese mite Tyrophagus putrescentiae (Schrank) (Acarina, Acaridae)", EXPERIENTIA , 36(4), 406-7 CODEN: EXPEAM; ISSN: 0014-4754, 1980,
- DATABASE WPI Week 201657 Thomson Scientific, London, GB; AN 2016-494772 XP002772699, & JP 2016 145176 A (RIKEN KORYO KOGYO KK) 12 août 2016 (2016-08-12)
- DATABASE CAPLUS [Online] CHEMICAL ABSTRACTS SERVICE, COLUMBUS, OHIO, US; DEVINE, GREGOR J. ET AL: "Salmon lice , Lepeophtheirus salmonis, exhibit specific chemotactic responses to semiochemicals originating from the salmonid, Salmo salar", XP002772700, extrait de STN Database accession no. 2000:648267 & DEVINE, GREGOR J. ET AL: "Salmon lice , Lepeophtheirus salmonis, exhibit specific chemotactic responses to semiochemicals originating from the salmonid, Salmo salar", JOURNAL OF CHEMICAL ECOLOGY , 26(8), 1833-1847 CODEN: JCECD8; ISSN: 0098-0331, 2000,
- DATABASE WPI Week 201657 Thomson Scientific, London, GB; AN 2016-494772 XP002778492, & JP 2016 145176 A (RIKEN KORYO KOGYO KK) 12 août 2016 (2016-08-12)
- DATABASE CAPLUS [Online] CHEMICAL ABSTRACTS SERVICE, COLUMBUS, OHIO, US; REFAAT, A. M. ET AL: "Acaricidal activity of sweet basil and French lavender essential oils against two species of mites of the family Tetranychidae ( Acari : Tetranychidae)", XP002778490, extrait de STN Database accession no. 2003:30990 & REFAAT, A. M. ET AL: "Acaricidal activity of sweet basil and French lavender essential oils against two species of mites of the family Tetranychidae ( Acari : Tetranychidae)", ACTA PHYTOPATHOLOGICA ET ENTOMOLOGICA HUNGARICA , 37(1-3), 287-298 CODEN: APEHEG; ISSN: 0238-1249, 2002, DOI: 10.1556/APHYT.37.2002.1-3.28 10.1556/APHYT.37.2002.1-3.28
- DATABASE CAPLUS [Online] CHEMICAL ABSTRACTS SERVICE, COLUMBUS, OHIO, US; SALVADOR, ANGELO C. ET AL: "Can volatile organic metabolites be used to simultaneously assess microbial and mite contamination level in cereal grains and coffee beans?", XP002778491, extrait de STN Database accession no. 2013:670121 & SALVADOR, ANGELO C. ET AL: "Can volatile organic metabolites be used to simultaneously assess microbial and mite contamination level in cereal grains and coffee beans?", PLOS ONE , 8(4), E59338 CODEN: POLNCL; ISSN: 1932-6203, 2013, DOI: 10.1371/JOURNAL.PONE.0059338 10.1371/JOURNAL.PONE.0059338

## Description

L'invention concerne une composition anti-acariens et ses utilisations notamment dans le domaine vétérinaire.

Chez les volailles, on distingue plusieurs espèces de « poux », dont plusieurs sont des acariens (classe des arachnides). Ces « poux » du groupe des acariens regroupent plusieurs espèces hématophages (qui se nourrissent de sang) d'importance économique et/ou sanitaire. Parmi eux, le plus courant en élevage de pondeuses en Europe et Asie est le pou rouge des poules *Dermanyssus gallinae.* Le pou rouge du Nord *Ornithonyssus sylviarum* est un autre acarien hématophage qui pose problème en élevages de volailles, en particulier en Amérique du Nord.

On dit qu'il s'agit d'ectoparasites car ces acariens se nourrissent depuis la surface externe de l'être vivant qu'il parasite. Bien qu'étroitement apparentées et toutes les deux hématophages strictes, les deux espèces de « pou » dites « poux rouges » (*D. gallinae* et O. *sylviarum*) n'ont pas exactement les mêmes modes de vie : le pou rouge des poules, *D. gallinae,* est en fait un microprédateur, au même titre que le moustique femelle adulte et la punaise de lit. Il vit à distance du corps de l'hôte et un individu femelle adulte peut se nourrir successivement sur plusieurs individus hôtes différents. Il réalise toutes les étapes de son développement (mue, ponte) dans l'environnement. Le pou rouge du Nord O. *sylviarum* se comporte davantage comme un ectoparasite typique : il demeure sur l'hôte en dehors des repas, et peut pondre et muer sur le corps de l'hôte. En cas d'infestation importante, une partie de la population peut cependant se comporter comme *D. gallinae* et s'accumuler dans des interstices situés dans l'environnement de l'hôte.

Les particularités biologiques du pou rouge des poules *D. gallinae* énoncées ci-dessus le rendent très persistant dans les bâtiments d'élevage : il ne vit pas sur son hôte, ne se déplace dessus que pour des repas très rapides et s'accumule dans des gites multiples fournis par les bâtiments d'élevage. Après son repas de sang, l'acarien se loge dans des interstices étroits (dans les charnières de porte, les petites fissures, les fentes, sous les fientes sèches, dans les pondoirs, les jonctions des pièces des perchoirs etc.).

La prévalence du pou rouge des poules *D. gallinae* est élevée dans les élevages de pondeuses en Europe (entre 56 et 90 % dans les élevages français selon les types d'élevage). Il est responsable de dégâts directs avec une augmentation du stress et de la mortalité chez les volailles, ainsi que du taux d'oeufs déclassés et peut entraîner des problèmes d'anémie chez la poule, sans parler de son rôle de réservoir voire de vecteur vis-à-vis de microorganismes pathogènes (salmonelles, virus de la maladie de Newcastle ...). Tout cela se traduit par une augmentation accrue des risques sanitaires en élevages de pondeuses et par une perte économique substantielle au niveau de la production d'oeufs coquilles.

Son mode de vie particulier rend le pou rouge *D. gallinae* extrêmement difficile à contrôler, les acaricides pulvérisés n'atteignant qu'une toute petite portion des populations de poux (ceux qui sont à la recherche d'un repas et ceux qui en reviennent). De plus, du fait du risque de concentration de résidus dans les d'oeufs de consommation exposés durant la bande de poule, la liste des produits acaricides de synthèse autorisés (en Europe au moins) pour les poules pondeuses est très restreinte et constituée de produits faiblement rémanents. Les méthodes de lutte alternatives qui consistent en des pulvérisations de substances d'origine naturelle se heurtent plus ou moins aux mêmes difficultés (poudres de silice, soufre, huiles essentielles...). D'autres méthodes alternatives sont utilisées avec des résultats variables mais encourageants : administration aux poules de substances répulsives pour le pou (aliment, boisson), lutte biologique par inoculation d'acariens prédateurs, application locale d'huiles... Dans tous les cas, aucun moyen unique ne semble suffire et le consensus actuel est le suivant : l'amélioration du contrôle du pou rouge nécessite la mise en synergie de plusieurs moyens complémentaires.

En outre, ces mêmes particularités biologiques rendent les niveaux d'infestations très difficiles à évaluer, voire l'infestation difficile à détecter, par l'éleveur ou le technicien avicole : en général, les acariens commencent à être observés lorsque l'infestation a déjà atteint un niveau avancé. Par conséquent, les éleveurs ont tendance soit à traiter systématiquement, soit trop tard pour limiter les dommages. De manière à réduire l'impact environnemental et sanitaire des traitements et en augmenter l'efficacité, proposer un moyen de monitoring efficace est un enjeu majeur.

Parmi les brevets qui se sont intéressés jusqu'à présent à ce type de question chez les arachnides hématophages en volaille, la demande EP1531840A1 vise à résoudre un problème d'infestation par des arachnides, et en particulier l'infestation des poulaillers par les poux. Ce problème est résolu par le fait que l'inventeur a isolé des phéromones à partir de sécrétions récoltées au niveau de la glande uropygienne de canards et de poules. L'inventeur a ainsi identifié deux phéromones majeures dont il a caractérisé une partie des constituants : une allomone ayant un effet répulsif et une kairomone ayant un effet attracteur sur les poux. L'allomone est essentiellement constituée des esters nommés de la manière suivante : adipate de bis(2-ethylhexyl) et de diisobutyrate de 2,2,4-triméthyle-1,3 pentanediol (sic), dans des proportions quasi équimolaires. La kairomone est quant à elle constituée essentiellement des molécules suivantes (alcanes, alcènes et alcools) : heptadécène-1-ol, heptadécane/heptadécène, d'octadécène 1-ol et octadécane/octadécène, dans des proportions quasi équimolaires. Toutefois, ces composés sont issus directement des glandes des oiseaux. Les inventeurs de ce document n'ont pas fait la preuve qu'un cocktail de ces seuls composés possède la même activité que l'extrait total de glande uropygienne. Même s'ils sont majoritaires, il n'est donc pas certain que les composés identifiés dans cette demande soient responsables des activités biologiques d'allomone et de kairomone, compromettant ainsi potentiellement l'exploitation à grande échelle de cette invention pour traiter des poulaillers commerciaux. En outre, il s'agit de cocktails de composés faiblement volatils. Les composés issus des glandes uropygiennes des poules ont surtout été montrés stimulant la prise de nourriture chez le pou mais aucun test permettant d'établir un comportement d'attraction à distance n'a été proposé (mise en contact directe de l'acarien avec la substance dans les études disponibles). En outre, rien n'est démontré quant à la volatilité des composés (tous les composés ont un point d'ébullition supérieur à 280°C à pression atmosphérique, supérieur à 300°C pour la kairomone) ni quant à l'effet de la kairomone sur l'attraction des poux dans cette demande.

D'autres méthodes ont également été proposées en utilisant une fois encore des kairomones pour se débarrasser d'insectes, d'acariens, ou d'autres bioagresseurs. On peut citer notamment la demande WO2007118297, qui propose un mélange d'huile de ricin gélifiée, de lignine, d'un insecticide, et d'une phéromone ou kairomone.

Ici encore, l'utilisation de cocktails de molécules hormonales non individualisées, empêchant notamment leur usage sous la forme de produit de synthèse chimique, est difficile à l'échelle industrielle sans augmenter considérablement les coûts de fabrication (nécessité d'élever les animaux sources, de standardiser la purification et la stabilisation des cocktails de composés d'origine naturelle) et la variabilité de la qualité des produits finaux

La demande WO2010130990 décrit les utilisations d'acide octanoïque et d'octanal (entre autres composés) pour attirer les acariens des volailles. La demande JP2004231582 décrit les utilisations de (E)-non-2-enal, d'octanal et de nonanal (entre autres composés) dans le même but. De même, WO2010143752 mentionne l'oct-1-en-3-ol en mélange avec des aldéhydes comme l'octanal ou le nonanal pour attirer les insectes et les tiques.

Aussi, il reste donc un besoin de fournir une composition anti-acariens qui soit simple à produire, peu couteuse, respectueuse de l'environnement et surtout efficace à distance.

Un objectif de l'invention est de fournir une telle composition.

Un autre objectif de l'invention est de proposer une méthode permettant d'éliminer les acariens efficacement et sans danger pour les animaux de rente, les employés et autres personnes à leur contact, ainsi que l'environnement.

Encore un autre objectif de l'invention est de fournir des pièges à acariens.

L'invention concerne une composition comprenant à titre de substance active un mélange des composés, notamment synthétiques, suivants : le (E)-non-2-enal, l'acide nonanoïque, l'octanal, le nonanal et l'oct-1-en-3-ol.

L'invention repose sur la constatation surprenante faite par les inventeurs selon laquelle le mélange des composés susmentionnés permet de reproduire artificiellement l'odeur des oiseaux et en particulier celle de gallinacés

Dans l'invention, le (*E*)-non-2-enal (numéro CAS : 18829-56-6) est représenté par la formule semi-développée I suivante : 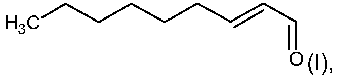 l'acide nonanoïque (numéro CAS : 112-05-0) est représenté par la formule semi-développée II suivante : 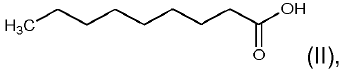 l'octanal (numéro CAS : 124-13-0) est représenté par la formule semi-développée III suivante : 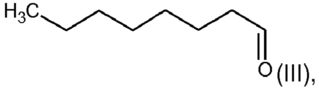 le nonanal (numéro CAS : 124-19-6) est représenté par la formule semi-développée suivante 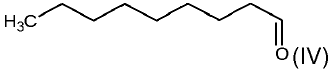 et l'oct-1-en-3-ol (numéro CAS : 3391-86-4) est représenté par la formule semi-développée suivante :

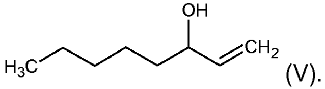

Les différents composés décrits ci-dessus sont disponibles dans le commerce très facilement, et l'homme du métier peut se les procurer au sein de différentes sociétés, et notamment auprès de la société Sigma-Aldrich aux Etats-Unis ou ses différentes filiales de par le monde.

Les différents composés susmentionnés sont préférentiellement, dans les conditions normales de température et de pression à l'état liquide (1bar, température variant de 5°C à 30 °C). Ces composés sont notamment volatils (ils ont été capturés suivant la technique du headspace, qui sélectionne les composés volatils uniquement), ce qui permet leur diffusion dans l'atmosphère environnante.

Aussi, avantageusement, l'invention concerne une composition susmentionnée comprenant à titre de substance active un mélange liquide des composés suivants : le (*E*)-non-2-enal, l'acide nonanoïque, l'octanal, le nonanal et l'oct-1-en-3-ol.

Ce mélange est notamment équivolumique, c'est-à-dire qu'il contient un volume essentiellement identique de chacun des composés listés. Cela signifie que chacun des composés de la composition susmentionnés sont mélangés à volume égal, par exemple, 500 microlitres de chacun d'eux.

Les composés contenus dans la composition sont essentiellement purs. Cela signifie notamment sous forme liquide que chacun des composés, avant leur mélange pour obtenir la composition selon l'invention, sont présents à au moins 95%, notamment au moins 96%, notamment au moins 97%, notamment au moins 98% en mole par rapport à la substance totale.

Avantageusement, l'invention concerne la composition susmentionnée, comprenant en outre de l'acide octanoïque (numéro CAS 124-07-2) de formule VI suivante

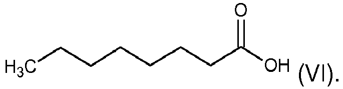

Lors de la caractérisation de l'odeur des oiseaux, et en particulier de la poule, les inventeurs ont mis en évidence que 4 composés étaient présents majoritairement ((*E*)-non-2-enal, acide nonanoïque, octanal, nonanal). Deux autres composés parmi les composés moins abondants dans les échantillons d'odeur (oct-1-en-3-ol et acide octanoïque) ont été identifiés comme intéressants aussi au vu de la littérature car attractants vis-à-vis de tiques (acariens aussi). Les données expérimentales correspondantes sont mentionnées dans les exemples ci-après.

Avantageusement, l'invention concerne la composition susmentionnée, comprenant en outre l'un au moins des composés suivants :
l'1-octanol (numéro CAS 111-87-5), de formule VI suivante: 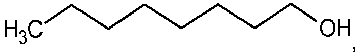
le 1-nonanol (numéro CAS 143-08-8) de formule VII suivante : 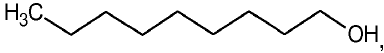 et
le 2-octanone (numéro CAS 111-13-7) de formule VIII suivante :

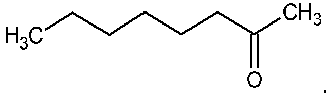

De manière avantageuse, l'invention concerne la composition susmentionnée, comprenant tous les composés de formule I à VIII.

Dans le cas d'une utilisation en extérieur ou à des températures basses, notamment en hiver dans des bâtiments très aérés, il peut être avantageux d'associer à la composition selon l'invention au moins un dispositif chauffant, de type résistance, permettant de générer un petit flux d'air tempéré afin d'augmenter la volatilité des composés contenus dans ladite composition.

Il peut également être avantageux d'associer à la composition selon l'invention au moins un adjuvant également destiné à augmenter la volatilité des composés contenus dans ladite composition selon l'invention. Cet adjuvant est choisi notamment parmi des esters organiques plus volatils que les composés de la composition susmentionnée et ne présentant pas l'activité attractive selon l'invention.

L'invention concerne en outre l'utilisation d'une composition telle que définie ci-dessus, pour la décontamination, ou la prévention de la contamination des élevages d'oiseaux par des acariens.

En d'autres termes, l'invention concerne l'utilisation d'une composition susmentionnée comprenant à titre de substance active un mélange, notamment liquide, notamment équivolumique, des composés suivants : le (*E*)-non-2-enal, l'acide nonanoïque, l'octanal, le nonanal et l'oct-1-en-3-ol pour la décontamination, ou la prévention de la contamination des élevages d'oiseaux par des acariens, ou encore la surveillance continue des élevages d'oiseaux susceptibles d'être infectés par les acariens.

Les inventeurs ont mis à profit la caractérisation de l'odeur des oiseaux, en particulier de la poule pour produire une odeur artificielle de ceux-ci. Cette odeur artificielle a ainsi été utilisée pour créer un leurre et attirer les parasites des oiseaux loin de leurs cibles.

Dans l'invention, les acariens sont définis selon leur classification phylogénétique communément utilisée, à savoir : ce sont des arachnides de très petite taille, voire microscopique au corps dénué de segmentation dans la partie centrale (idiosome), portant un gnathosome (équivalent de la tête, mais dépourvu de ganglion principal et autres attributs permettant de définir une tête) plus ou moins conique et pourvu de chélicères et de pédipalpes, vivant pour certains en ectoparasite de l'homme, des animaux ou des plantes.

Dans un mode de réalisation avantageux, l'invention concerne l'utilisation susmentionnée, dans laquelle lesdits oiseaux sont des gallinacés.

Par gallinacés, on entend dans l'invention des oiseaux de basse-cour tels que des cailles, des dindes, des faisans, des paons, des pintades ou des poules. Il est particulièrement avantageux que les animaux concernés par l'utilisation de la composition susmentionnée soient des poules.

Dans encore un autre mode de réalisation avantageux, l'invention concerne l'utilisation susmentionnée, où lesdits acariens sont des acariens communément appelés poux, notamment poux rouges, poux gris ou poux noirs.

Bien que les poux ne soient pas formellement des arachnides, mais des insectes, cette terminologie de poux est communément utilisée pour désigner les acariens parasites des oiseaux, et notamment des poules. Aussi, dans l'invention, cette dénomination de poux sera utilisée en référence à l'utilisation classique faite par l'homme du métier dans ce domaine zootechnique.

De manière encore plus avantageuse, l'invention concerne l'utilisation susmentionnée, où lesdits poux sont choisis parmi les espèces suivantes *Dermanyssus gallinae* et *Ornithonyssus sylviarum.*

Le pou rouge *Dermanyssus gallinae* a été découvert en 1778 par De Geer et est aujourd'hui classé de la manière suivante : Classe : Arachnida, Sous-Classe : Acari, Ordre : Mesostigmata, Superfamille : Dermanyssoidea, Famille : Dermanyssidae, Genre : *Dermanyssus* et Espèce : *Dermanyssus gallinae.*

Ces poux sont des microprédateurs hématophages, communément considérés comme parasites intermittents. Outre l'action directe de prélèvement de sang sur les oiseaux (en particulier les poules), ils transportent également des virus et bactéries agents de maladies, comme le virus du choléra aviaire, des salmonelles et des spirochètes. Les stades nymphaux et adultes peuvent survivre sans repas pendant plusieurs mois, mais ils ne vont sur l'animal que pour le repas sanguin, très rapide (durée comparable à la durée du repas sanguin par le moustique femelle adulte).

Le pou rouge du Nord (parfois appelé pou noir) *Ornithonyssus sylviarum* a été découvert en 1877 par Canestrini & Fanzago, est aujourd'hui classé de la manière suivante : Classe : Arachnida, Sous-Classe : Acari, Ordre : Mesostigmata, Superfamille : Dermanyssoidea, Famille : Macronyssidae, Genre : *Ornithonyssus* et Espèce : *Ornithonyssus sylviarum*

La couleur de ces différents « poux » acariens dépend directement de l'état de gorgement et du niveau de digestion du sang ingéré car leur cuticule est transparente : juste après le repas, le « pou » est rouge vif (d'où son nom de « pou rouge »), puis passe par différentes couleurs uniformes (rouge bordeaux, brun, noir) et devient gris-beige et blanc lorsqu'il a achevé la digestion. Quant à sa larve, elle est blanche translucide, de même que le premier stade nymphal avant repas (protonymphe).

Ces poux, ou pseudo poux sont retrouvés dans le monde entier, à la fois dans la faune sauvage et en élevage et posent problème dans les élevages de volaille principalement d'Europe et d'Asie pour *D. gallinae,* et principalement d'Amérique du Nord pour *O*. *sylviarum.*

Le cycle de *D. gallinae* implique 5 stades (œuf, larve, protonymphe, deutonymphe, adulte) et nécessite entre 7 et 10 jours d'oeuf à œuf en conditions d'élevage (température et hygrométrie proches de l'optimal). Il est réalisé dans sa totalité dans l'environnement, à distance du corps de l'hôte. Le contact entre l'acarien et l'hôte a lieu entre 3 et 10 fois à raison de quelques minutes en tout au cours de sa vie (un contact par repas de sang). La survie de *D. gallinae* est de plusieurs mois selon les conditions environnementales en l'absence d'hôte (au moins 9 mois). Le cycle d'*O*. *sylviarum* comprend aussi 5 stades et survivrait peut-être un peu moins longtemps en l'absence d'hôte.

Les symptômes associés à une infestation par les poux *D. gallinae* sont principalement liés au stress et à l'anémie. Peu voire pas de marques de piqûres par l'acarien sont généralement recensées, des lésions indirectes sont produites par l'augmentation du picage entre oiseaux. *O*. *sylviarum,* en revanche, se comporte davantage comme un ectoparasite typique (il peut véritablement vivre sur l'hôte, ce que ne fait jamais *D. gallinae*) et entraîne notamment des symptômes cutanés visibles : le tégument devient rugueux, les plumes et duvet sont noircis par les déjections des acariens et le sang séché, en diverses parties chez les mâles, en région péri cloacale chez les femelles.

L'invention concerne également une méthode de détection de l'infestation d'un bâtiment d'élevage d'oiseaux par des acariens, comprenant une étape de mise en contact d'une composition telle que définie ci-dessus, avec l'atmosphère environnante, et une étape de détermination de la présence ou de l'absence d'acariens, voire une estimation du nombre d'acariens présents dans ledit bâtiment.

En d'autres termes, l'invention concerne une méthode de détection de l'infestation d'un élevage d'oiseaux par des acariens, comprenant
- une étape de mise en contact d'une composition comprenant à titre de substance active un mélange liquide équivolumique des composés suivants : le (E)-non-2-enal, l'acide nonanoïque, l'octanal, le nonanal et le oct-1-en-3-ol, avec l'atmosphère environnante, et
- une étape de détermination de la présence, de l'absence ou du nombre d'acarien présent dans le système utilisé.

De manière avantageuse, l'invention concerne la méthode de détection susmentionnée de l'infestation d'un élevage de poules par des poux rouges, noirs ou gris, notamment les poux *Dermanyssus gallinae* et *Ornithonyssus sylviarum* dans un poulailler.

Afin d'améliorer la prévention des infestations et l'efficacité des traitements, de nombreux auteurs ont cherché et cherchent à mettre en place un système de monitoring (surveillance) permettant la détermination d'un seuil d'infestation critique à partir duquel il faut traiter. Jusqu'à aujourd'hui, seuls des pièges passifs sont disponibles vis-à-vis des poux *Dermanyssus gallinae* et *Ornithonyssus sylviarum,* faute d'attractant efficace et facilement reproductible. Relativement peu sensibles et d'usage contraignant, ces pièges passifs n'ont pas jusqu'à présent satisfait aux exigences de monitoring en routine (variance extrême des résultats obtenus). Les inventeurs ont mis à profit les propriétés attractives qu'exerce la composition selon l'invention sur les poux, du fait qu'elle mime l'odeur des oiseaux, en particulier l'odeur des poules.

Aussi, en mettant en contact avec l'air la composition selon l'invention, et du fait de la volatilité marquée des composés qui la compose, l'odeur artificielle va se propager dans le lieu d'élevage, et ainsi attirer les poux potentiellement présents. Dès lors, les poux vont spontanément, attirés par l'odeur, venir jusqu'à la source d'émission de l'odeur, sachant qu'ils sont doués d'une mobilité intrinsèque importante (capables de parcourir plusieurs mètres en une minute).

Par divers moyens, tels que des surfaces blanches simples permettant de compter visuellement les poux, ou des surfaces adhésives ou adhérentes, qui permettent de retenir les poux à la source d'émission de l'odeur, il est possible de déterminer, après au moins une nuit, l'absence ou la présence de poux dans un certain rayon autour du piège.

En cas de présence de poux dans un piège, il est possible de les dénombrer (par exemple le nombre de poux par centimètre carré ou la proportion de surface occupée par les poux) afin d'obtenir une indication du niveau d'infestation local. Pour ce faire, il est possible par exemple de placer des surfaces blanches quadrillées autour de la source de l'odeur artificielle et/ou de fournir des images de gammes indicatives du taux de recouvrement. On peut aussi noter simplement la présence (piège positif) ou l'absence (piège négatif) de poux dans le piège.

Afin fin de mesurer le niveau de contamination d'un bâtiment d'élevage, il est nécessaire de travailler avec plusieurs pièges, largement répartis spatialement, car les populations sont très agrégées et que les foyers se développent localement avant de s'étendre largement. Pour établir la mesure à un instant t, on peut soit établir la moyenne du nombre des poux recensés dans chaque piège au cours du relevé, soit, pour plus de facilité, se contenter de noter la présence ou l'absence de poux dans les différents pièges et calculer le pourcentage de pièges positifs sur l'ensemble du relevé.

Afin de déterminer un seuil critique à partir duquel il est important de traiter (démarche typiquement utilisée dans le cadre des pratiques d'Integrated Pest Management (IPM) en agriculture), un suivi régulier dans le temps est nécessaire. Une image ponctuelle ne permet pas de se faire une idée juste du risque de pullulation, puisque qu'elle ne dit pas où l'on se situe dans la dynamique des populations, typiquement composée d'une phase de latence, suivie d'une phase de croissance exponentielle puis d'une phase d'équilibre plus ou moins oscillante. Comme avec tous les bioagresseurs dans le cadre des démarches modernes d'IPM, si seuls de rares poux sont détectés, il peut ne pas être nécessaire de décontaminer l'élevage (la phase de latence peut être longue). Le suivi régulier permettra d'éviter un débordement consécutif à la croissance exponentielle de la population, augmentation qui peut avoir lieu plusieurs mois après le début de l'infestation.

Pour déterminer le seuil critique à partir duquel il est important de tenter une désinfestation (ou décontamination), l'homme du métier fait appel à son expérience et notamment à sa connaissance de la physiologie et du comportement du pou.

Le seuil critique peut être déterminé sur la base de l'identification de changements dans la dynamique temporelle des populations. Par exemple, il est possible de réaliser des mesures de détermination de présence ou d'absence de poux dans un ou plusieurs bâtiments de manière continue dans le temps, en procédant à des relevés à intervalle régulier (toutes les semaines, voire toutes les deux semaines ou trois semaines) tout au long de la bande (durée standard pour les bandes de pondeuses = 1 an) et ce dès la fin du vide sanitaire afin de prendre en compte la période de latence. L'homme du métier prendra alors la décision de commencer un traitement pour éliminer les poux lorsqu'il observera un changement significatif dans la présence des poux dans les pièges confirmé après deux relevés consécutifs. Cela signifie que si dans un premier relevé, l'homme du métier constate que les pièges contiennent beaucoup plus de poux dans les pièges ou un pourcentage de pièges positifs beaucoup plus élevé que lors des relevés antérieurs, et que cette même observation est également retrouvée au relevé suivant, il décidera donc d'engager un processus de décontamination (en utilisant par exemple des acaricides).

Si la mise en place du suivi n'est pas réalisée en fin de vide sanitaire comme recommandé ci-dessus, mais en cours de bande, et que la charge relevée dans les pièges est très importante dès le premier relevé, il est possible que la population soit déjà dans la phase de croissance ou dans la phase d'équilibre. Il est alors recommandé de mettre en place très rapidement un protocole de décontamination de l'élevage, afin de préserver les animaux.

Dans un autre aspect, l'invention concerne un dispositif destiné à attirer les acariens, le dispositif comprenant :
- des moyens permettant la mise en contact d'une composition telle que définie à ci-dessus avec l'atmosphère environnante, et
- des moyens permettant de maintenir lesdits acariens dans ledit dispositif et/ou de tuer lesdits acariens.

De manière avantageuse, l'invention concerne un dispositif susmentionné comprenant :
- un container, comprenant au moins une ouverture et au moins une paroi ;
- un attractant d'acariens, qui est contenu dans ledit container tel que ledit attractant est libéré par ladite ouverture traversant ladite paroi, ledit attractant étant une composition telle que définie ci-dessus, et
- des moyens de rétention permettant de retenir les acariens attirés par ledit attractant et/ou des moyens permettant de tuer lesdits acariens attirés, lesdits moyens de rétention et/ou permettant de tuer les acariens étant avantageusement positionnés dans ledit container.

Dans le dispositif susmentionné, les moyens de rétentions peuvent correspondre à tout moyen ayant pour effet de retenir les acariens au sein du dispositif, et notamment, sans être limitatif :
- un bac anti évasion : il s'agit d'un récipient creux dont les parois latérales sont telles qu'elles sont infranchissables lorsque l'acarien est entré dans le récipient. Ceci peut être notamment dû au fait que les parois sont trop haute, et/ou qu'elles ne permettent pas à l'acarien d'adhérer dessus et donc à l'acarien de grimper le long des parois,
- une ou plusieurs surfaces adhésives ou gluantes : il s'agit par exemple de colles ou de substances dans lesquelles l'acarien en contact sur ladite ou lesdites surfaces et va être ainsi limité dans ses déplacements, soit car ses pattes seront prises dans un réseau et sa progression sera limitée, soit car il sera fixé à ladite ou lesdites surfaces.

Bien évidemment, on peut imaginer une combinaison de moyens tels qu'un récipient anti évasion dont les parois internes sont recouvertes d'une ou plusieurs surfaces adhésives ou gluantes.

Il peut également être avantageux que le dispositif susmentionné possède des moyens permettant de tuer les acariens, c'est-à-dire ayant un effet acaricide. Par acaricide, on entend dans l'invention un composé ou une composition capable de tuer les acariens, soit à l'état larvaire soit à l'état adulte, mais aussi éventuellement capable de tuer les œufs. En outre, un acaricide selon l'invention peut également, sans les tuer, rendre les femelles stériles.

Des exemples de substances acaricides sont les suivants :
- des composés de la famille des organo-phosphorés (inhibiteurs de l'acétylcholinestérase) tels que le phoxime, le malathion, le tetrachlorvinphos, ou le dichlorvos (molécules de synthèse)
- des composés de la famille des carbamates (inhibiteurs de l'acétylcholinestérase) tels que le carbaryle (molécules de synthèse)
- des composés de la famille des pyrethrinoïdes (modulateurs du canal sodium dépendant du voltage) tels que la permethrine (molécules de synthèse)
- des composés de la famille des formamidines (agonistes des récepteurs à octopamine) tels que l'amitraz (molécules de synthèse)
- des composés de la famille des spinosynes (modulateurs des récepteurs nicotiniques de l'acétylcholine) tels que le spinosad (molécule produite par des bactéries, proposée pour l'usage en élevages de poules pondeuses biologiques).

D'autres substances, d'origine naturelle, peuvent également être utilisées telles que le pyrèthre naturel, le soufre ou la silice amorphe (ou la terre de diatomées, principalement composée de silice).

Ces différents composés peuvent être utilisés seuls ou en combinaison.

Aussi, avantageusement, l'invention concerne un dispositif tel que mentionné ci-dessus, dans lequel les moyens permettant de capturer sont des récipients anti évasion ou des surfaces adhésives ou gluantes, et où lesdits moyens permettant de tuer les acariens sont des composés chimiques ou des organismes prédateurs ou parasites desdits acariens.

L'invention concerne par ailleurs une méthode de prévention de l'infestation d'élevages d'oiseaux par des acariens, ou de décontamination des élevages d'oiseaux infectés par des acariens, comprenant une étape d'installation, au sein desdits élevages, d'un ou plusieurs dispositifs tels que définis ci-dessus.

Les problèmes engendrés par l'accumulation des populations de poux à distance de l'hôte, dans des interstices inaccessibles à l'homme, peuvent être résolus par le piégeage actif des poux pour les contrôler suivant la méthode « attract & kill ». Les pièges passifs, seuls disponibles jusqu'à aujourd'hui, ne sont par nature pas appropriés au contrôle : il ne peut pas suffire de piéger au hasard quelques individus et de les tuer pour contrôler les populations de quelque bioagresseur que ce soit. Afin de prévenir l'infestation par les poux, il peut donc être avantageux de placer dans les élevages d'oiseaux, et en particuliers dans les poulaillers, notamment les poulaillers industriels, des dispositifs tels que définis ci-dessus, de sorte que si des poux sont présents dans le bâtiment d'élevage, ils seront attirés dans lesdits dispositifs, et pourront le cas échéant être tués ou retenus, voire les deux.

L'invention concerne également un kit comprenant :
- d'une part un container, comprenant au moins une ouverture et au moins une paroi, ledit container comprenant notamment des moyens de rétention permettant de retenir des acariens et/ou des moyens permettant de tuer lesdits acariens, et
- d'autre part, une composition telle que définie ci-dessus, avantageusement dans un récipient ou dans ou sur un objet solide (imprégné) pouvant être placé dans ledit container.

L'invention concerne en outre l'association de pièges attractants anti-évasion susmentionnés à une complémentation alimentaire des poules, ladite complémentation alimentaire étant répulsive pour les acariens

En d'autres termes, l'invention concerne une méthode de prévention de l'infestation susmentionnée, comprenant une étape de mise en contact d'une composition telle que définie ci-dessus, avec l'atmosphère environnante, et une étape de détermination de la présence ou de l'absence d'acariens, voire une estimation du nombre d'acariens présents dans ledit bâtiment, et comprenant en outre la mise à disposition des oiseaux un aliment comprenant un agent répulsif vis-à-vis des acariens.

De tels agents répulsifs sont connus de l'homme du métier et consistent essentiellement en un complément alimentaire à base de composés d'huiles essentielles mélangé à l'aliment ou à l'eau de boisson. Les oiseaux, et notamment la poule, ainsi nourris sont beaucoup moins attractifs pour les acariens que lorsqu'ils n'ont pas mangé le complément alimentaire.

Cette méthode a un effet synergique en repoussant l'acarien à distance de l'oiseau par manipulation de ses odeurs et l'attirant dans le même temps au moyen d'une odeur artificielle.

L'invention sera mieux comprise à la lumière des figures et des exemples suivants.

### BREVE DESCRIPTION DES FIGURES

La **figure 1** est une photographie montrant le dispositif de capture d'odeur utilisé dans le cadre de l'invention.
Les **figures 2A et 2B** sont des photographies montrant les éléments de l'installation utilisés pour les tests comportementaux.

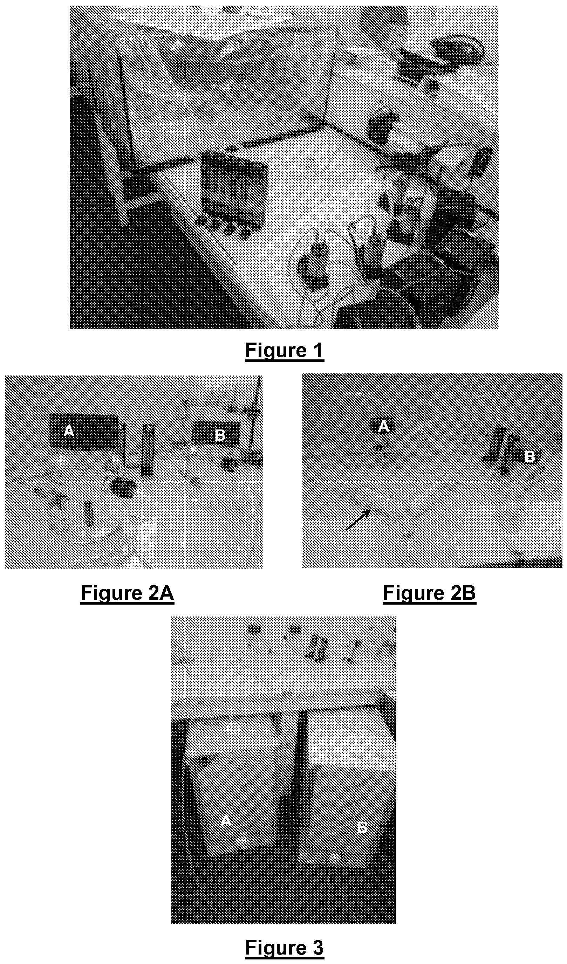

La figure 2A est une photographie où sont montrés les bocaux dans lesquels l'air purifié vient se charger en composés volatils de synthèse (A- bocal qui contient un flacon équipé d'un capillaire) ou non (B- bocal vide, témoin).
La figure 2B est une photographie où est montré l'olfactomètre en verre en forme de Y (indiqué par une flèche) placé sur une résistance chauffante, connecté aux deux bocaux montrés à la figure 2A.
La **figure 3** est une photographie montrant les boîtes en Plexiglas® pour les tests de comportement olfactif vis-à-vis de l'odeur de poules vivantes. Durant le test, l'une des boîtes contient une poule (A), l'autre reste vide (témoin - B).

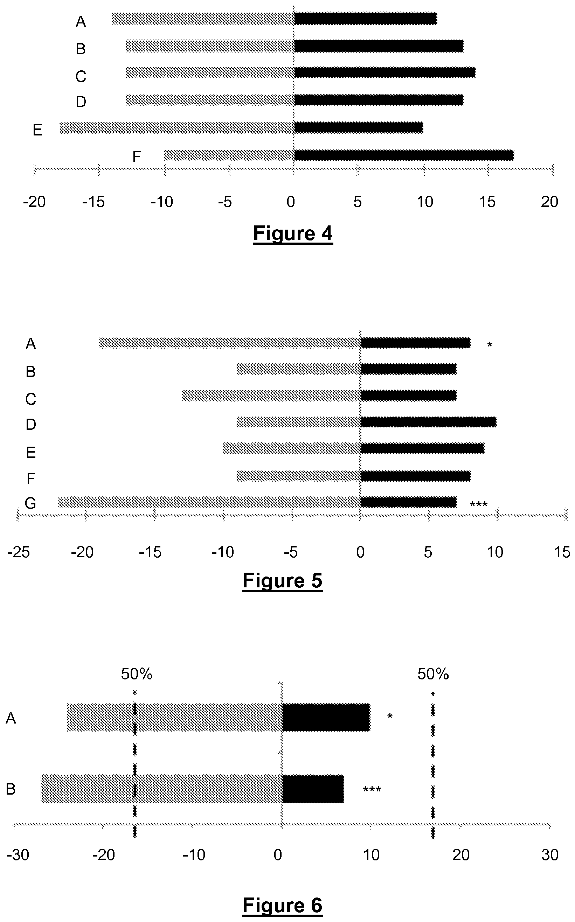

La **figure 4** est un histogramme montrant les résultats des tests de choix réalisés avec olfactomètres en Y et bocaux contenant des composés volatils individuels, dans des flacons à capillaires. Nombre d'individus testés pour chaque composé : n=30. Test binomial : Les barres noires représentent le nombre d'acariens qui ont choisi le témoin, les barres grises le nombre d'acariens qui ont choisi les compositions testées. * p<0,05, *** p<0,005. Non choix : 6,7 à 16,7%.
   A : (*E*)-non-2-enal, B : oct-1-en-3-ol, C : nonanal, D : octanal, E : acide octanoïque et F : acide nonanoïque.
La **figure 5** est un histogramme montrant les résultats des tests de choix réalisés avec l'olfactomètre en Y et deux bocaux contenant des composés volatils dans des flacons à capillaires. Nombre d'individus testés pour chaque composé : n=30. Test binomial : Les barres noires représentent le nombre d'acariens qui ont choisi le témoin, les barres grises le nombre d'acariens qui ont choisi les compositions testées. * p<0,05, *** p<0,005. Non choix : 10% pour le MIX5.0 (6 composés), 3,3% pour le MIX1.0 (5 composés excluant l'acide octanoïque), autres 33,3-46,7%.A : composition comprenant les 6 composés (Mix 5.0), B : composition comprenant les composés du Mix5.0 sauf le (E)-non-2-enal (Mix7.0), C : composition comprenant les composés du Mix5.0 sauf l'acide nonanoïque (Mix6.0), D : composition comprenant les composés du Mix5.0 sauf l'octanal (Mix4.0), E : composition comprenant les composés du Mix5.0 sauf le nonanal (Mix3.0), F : composition comprenant les composés du Mix5.0 sauf le oct-1-en-3-ol (Mix2.0) et G : composition comprenant les composés du Mix5.0 sauf l'acide octanoïque (Mix1.0).
La **figure 6** est un histogramme montrant les résultats des tests de choix réalisés avec l'olfactomètre en Y et deux boîtes en plexiglas avec poules vivantes. Nombre d'individus testés pour chaque souche de poule : n=38. Test binomial : Les barres noires représentent le nombre d'acariens qui ont choisi le témoin, les barres grises le nombre d'acariens qui ont choisi les compositions testées. * p<0,05, *** p<0,005. Non choix : 10,5%. A : souche *D. gallinae* 1VST et B : souche *D. gallinae* 2VST

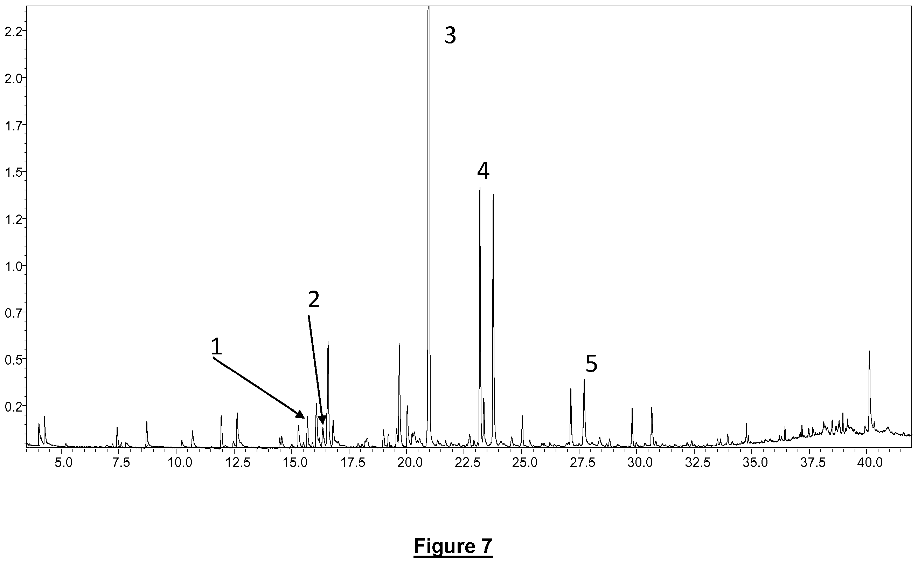

La **figure 7** est un exemple de chromatogramme obtenu après capture de l'odeur d'une poule. 1. oct-1-en-3-ol ; 2. octanal ; 3. nonanal ; 4. (E)-non-2-enal ; 5. acide nonanoïque

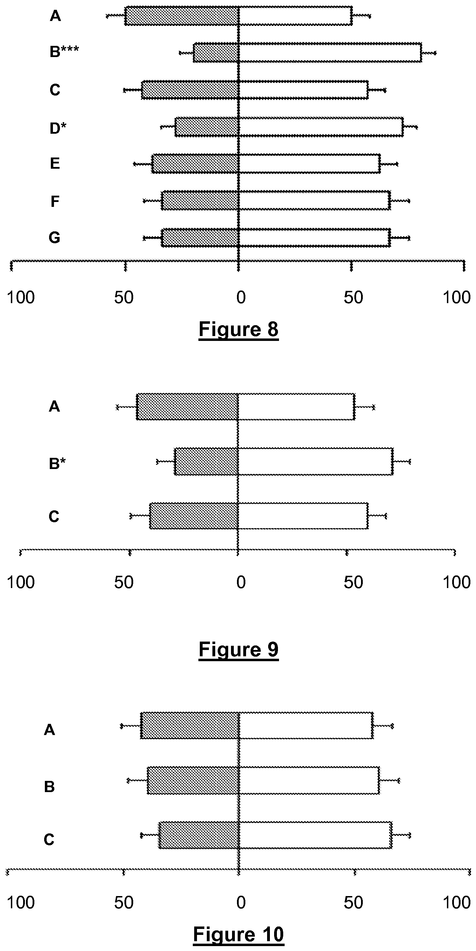

La **figure 8** est un histogramme montrant les résultats des tests de choix entre un cocktail (B à G) et un témoin (blanc sous forme d'air pur, A). Les barres grises représentent la proportion d'individus qui ont choisis le témoin (ou le côté gauche de l'olfactomètre pour le contrôle) et les barres blanches la proportion d'individus qui ont choisis le cocktail (ou le côté droit de l'olfactomètre pour le contrôle).
   Test binomial : différence non significative (A; C ; E à G), * = p<0.05 (D), ***= p<0.001 (B).
   A : blanc : 61 individus testés, 40 ayant fait un choix soit 34% n'ayant pas fait de choix.
   B : composition selon l'invention (le (E)-non-2-enal, l'acide nonanoïque, l'octanal, le nonanal, le oct-1-en-3-ol et l'acide octanoïque, en proportion équivolumique). 69 individus testés, 41 ayant fait un choix soit 41% n'ayant pas fait de choix.
   C : composition aux composés identiques à la composition ci-dessus (le (*E*)-non-2-enal, l'acide nonanoïque, l'octanal, le nonanal, le oct-1-en-3-ol et l'acide octanoïque), où l'oct-1-en-3-ol est en proportion minoritaire (10 fois inférieure aux quatre autres, ces derniers en proportion équivolumique). 54 individus testés, 42 ayant fait un choix soit 22% n'ayant pas fait de choix.
   D : composition aux composés identiques à la composition ci-dessus (le (*E*)-non-2-enal, l'acide nonanoïque, l'octanal, le nonanal, le oct-1-en-3-ol et l'acide octanoïque), où le (*E*)-non-2-enal est en proportion majoritaire (10 fois supérieure aux quatre autres, ces derniers en proportion équivolumique). 58 individus testés, 47 ayant fait un choix soit 19% n'ayant pas fait de choix.
   E : composition aux composés identiques à la composition ci-dessus (le (*E*)-non-2-enal, l'acide nonanoïque, l'octanal, le nonanal, le oct-1-en-3-ol et l'acide octanoïque), où l'acide nonanoïque est en proportion majoritaire (10 fois supérieure aux quatre autres, ces derniers en proportion équivolumique). 46 individus testés, 37 ayant fait un choix soit 20% n'ayant pas fait de choix.
   F : composition aux composés identiques à la composition ci-dessus (le (*E*)-non-2-enal, l'acide nonanoïque, l'octanal, le nonanal, le oct-1-en-3-ol et l'acide octanoïque, où l'octanal est en proportion majoritaire (10 fois supérieure aux quatre autres, ces derniers en proportion équivolumique). 43 individus testés, 30 ayant fait un choix soit 30% n'ayant pas fait de choix.
   G : composition aux composés identiques à la composition ci-dessus (le (*E*)-non-2-enal, l'acide nonanoïque, l'octanal, le nonanal, le oct-1-en-3-ol et l'acide octanoïque), où le nonanal est en proportion majoritaire (10 fois supérieure aux quatre autres, ces derniers en proportion équivolumique). 46 individus testés, 30 ayant fait un choix soit 35% n'ayant pas fait de choix.
La **figure 9** est un histogramme montrant les résultats des tests de choix entre un cocktail (B et C) et un témoin (blanc sous forme d'air pur, A). Les barres grises représentent la proportion d'individus qui ont choisis le témoin (ou le côté gauche de l'olfactomètre pour le contrôle) et les barres blanches la proportion d'individus qui ont choisis le cocktail (ou le côté droit de l'olfactomètre pour le contrôle).
   Test binomial : différence non significative (A et C), * = p<0.05 (B).
   A : blanc : 46 individus testés, 30 ayant fait un choix soit 36% n'ayant pas fait de choix.
   B : composition selon l'invention le (*E*)-non-2-enal, l'acide nonanoïque, l'octanal, le nonanal, le oct-1-en-3-ol, l'acide octanoïque, le 1-octanol, le 1-nonanol et le 2-octanone, en proportion equivolumique. 45 individus testés, 31 ayant fait un choix soit 31% n'ayant pas fait de choix.
   C : composition telle qu'observée en moyenne dans l'ensemble des chromatogrammes dont un exemple est visible dans la **figure 7****.** 50 individus testés, 32 ayant fait un choix soit 36% n'ayant pas fait de choix.
La **figure 10** est un histogramme montrant les résultats résultats des tests de choix entre un cocktail (B et C) et un témoin (blanc sous forme d'air pur, A). Les barres grises représentent la proportion d'individus qui ont choisis le témoin (ou le côté gauche de l'olfactomètre pour le contrôle) et les barres blanches la proportion d'individus qui ont choisis le cocktail (ou le côté droit de l'olfactomètre pour le contrôle).
   Test binomial : différence non significative (A à C).
   A : blanc : 41 individus testés, 30 ayant fait un choix soit 20% n'ayant pas fait de choix.
   B : composition selon l'invention (le (*E*)-non-2-enal, l'acide nonanoïque, l'octanal, le nonanal, le oct-1-en-3-ol, l'acide octanoïque, le 1-octanol, le 1-nonanol et le 2-octanone, en proportion equivolumique) où le (*E*)-non-2-enal est substitué par du (*Z*)-non-2-enal. 46 individus testés, 33 ayant fait un choix soit 28% n'ayant pas fait de choix.
   C : composition (le (*E*)-non-2-enal, l'acide nonanoïque, l'octanal, le nonanal, le oct-1-en-3-ol et l'acide octanoïque), où l'oct-1-en-3-ol est en proportion minoritaire (10 fois inférieure aux quatre autres, ces derniers en proportion équivolumique)) où le (*E*)-non-2-enal est substitué par du (*Z*)-non-2-enal. 49 individus testés, 35 ayant fait un choix soit 29% n'ayant pas fait de choix.

### EXEMPLES

### Exemple 1 : Attraction de Dermanyssus gallinae

L'association lâche oiseau hôte - pou microprédateur implique une capacité à trouver efficacement son hôte au moment du repas, rare et ponctuel. Les stimuli émis par l'hôte et agissant potentiellement sur le comportement de *D. gallinae,* hors CO₂ et température, n'ont pas fait l'objet de travaux aboutis jusqu'à présent. Le rôle de stimulus associé à des variations de température a été mis en évidence, avec des interactions plus ou moins complexes avec le CO₂, composé chimique non spécifique puisqu'émis par tout organisme ayant une respiration. En ce qui concerne les molécules volatiles émises par l'hôte susceptibles d'être spécifiques, et donc de contribuer à la détection de l'hôte, des auteurs ont testé l'activité biologique de bouquets d'odeurs non caractérisés chimiquement : en comparant l'attractivité de plumes et autres matériels biologiques présents dans les élevages, ils n'ont pas pu mettre en évidence de réponse claire aux odeurs émises par les matériaux testés. Il est cependant très probable que les odeurs émises par de seules plumes séparées du corps de l'oiseau ne soient pas tout à fait représentatives des odeurs émises par l'hôte entier.

Afin d'identifier des composés intéressants pour agir sur le comportement du pou rouge, les inventeurs ont entrepris une étude visant à mimer les odeurs de poule et à étudier les réponses olfactives de l'acarien. Ce travail a été réalisé en trois étapes:
(1) caractérisation des odeurs typiques de l'hôte (c'est-à-dire des bouquets de composés organiques volatils (COVs) émis par la poule),
(2) sélection, parmi les composés typiques (présents de manière systématique dans les odeurs de différentes poules), des composés les plus représentés, et assemblage desdits composés produits de manière synthétique (achat dans le commerce) en un cocktail mimétique de l'odeur de poule,
(3) caractérisation de la réponse olfactive de l'acarien auxdits composés, individuels ou en cocktail par des tests de choix en olfactomètre.

### Matériels et Méthodes :

### - Caractérisation des odeurs de poule et sélection des composés pour composition du cocktail

Les inventeurs ont utilisé une technique de prélèvement des odeurs de type « headspace » puis les ont analysées dans un chromatographe en phase gazeuse (GC) couplé à la spectrométrie de masse (MS). La technique « headspace » a été sélectionnée pour sa sensibilité et sa capacité à fournir des échantillons représentatifs des odeurs, ensemble de molécules volatiles, et peu pollués en molécules non volatiles par rapport aux échantillons collectés par extraction liquide par exemple. Pour prélever ses odeurs, la poule est placée dans un aquarium en verre dont l'intérieur est recouvert d'un film plastique inodore (nalophan®) afin de minimiser le risque de pollution par d'autres composés organiques volatils ou COVs que ceux de l'échantillon (**Figure 1**). Les molécules volatiles émises par la poule dans le volume de l'aquarium sont ensuite piégées durant 5 heures de manière passive par microextraction sur phase solide (fibre SPME - Solid Phase MicroExtraction). Les inventeurs ont ainsi procédé à vingt prélèvements soit environ 3 répétitions de capture par individu sur 7 individus différents et les ont analysés en GC-MS.

L'analyse des chromatogrammes au moyen du logiciel GCMS Solution (Shimadzu) permet de repérer les composés qui apparaissent systématiquement dans les COVs prélevés dans les « headspaces » produits autour des poules, considérés comme typique des odeurs de cet oiseau. Une fois ceux-ci listés et identifiés en se basant sur les spectres de masse (banques de spectres NIST, Wiley, Adams) ainsi que les indices de rétention standard des molécules (base de données Adams ou Pherobase), les composés présentant les aires sous pic les plus élevées et/ou déjà recensés comme attractants pour d'autres acariens hématophages (tiques) ont été retenus pour entrer dans la composition du cocktail. Lesdits composés sont ensuite commandés chez Sigma-Aldrich pour être assemblés en un mélange équivolumique.

### - Test de comportement en olfactomètre (tests de choix entre odeurs).

De manière à établir le caractère attractif ou non des composés testés, les inventeurs ont évalué la réponse comportementale de l'acarien à l'exposition à de l'air chargé en composé(s) volatil(s) synthétique(s) seul(s) ou en cocktail à travers des tests de comportement. De plus, afin de s'assurer la réponse au cocktail constitué est bien comparable à la réponse à une véritable odeur de poule, les inventeurs ont vérifié la capacité de l'acarien à détecter son hôte par le sens olfactif au moyen du même procédé.

Les tests de choix ont été réalisés grâce à une installation spécifique impliquant un olfactomètre en verre en forme de Y (diamètre intérieur : 4 cm ; longueur : 30 cm) relié à des compartiments dans lesquels de l'air circule. Cette installation permet d'exposer l'acarien à deux 'types' d'air, chargé ou non en composés volatils, et d'observer le choix.

L'installation est composée de deux récipients identiques (voir plus bas) contenant des composés volatils à tester ou rien (témoin) et d'un olfactomètre en verre en forme de Y à travers lesquels de l'air purifié circule. Une pompe située en amont propulse de l'air ambiant à travers du charbon actif puis de l'eau pour le purifier. Cet air purifié est ensuite propulsé à travers les deux récipients indépendamment, dans l'un sans rencontrer d'odeur à tester (témoin), dans l'autre en se chargeant en odeur, et en ressort pour être acheminé dans les branches de l'olfactomètre. Chacun de ces flux d'air, chargé d'odeur ou pur, parcourt ensuite simultanément l'une des branches du Y. L'acarien, introduit par l'ouverture du tube vertical (barre basale) du Y est ainsi exposé au composé ou au groupe de composés testés d'un côté, à de l'air pur de l'autre **(****Figures 2A et 2B****).** Pour chaque test, un unique acarien était utilisé, et éliminé juste après le test (utilisation unique de chaque acarien). L'olfactomètre était systématiquement rincé à l'éthanol et séché avant nouvel usage (un jeu de 9 olfactomètres permettait d'enchaîner les tests). Les connexions des récipients aux branches de l'olfactomètre étaient interverties une fois sur deux afin de s'assurer qu'il n'y avait pas d'effet « côté ». Les débits des flux d'air produits dans les boîtes ont été déterminés de manière à permettre à l'acarien de conserver son adhérence au support et de se déplacer sans difficulté.

Pour tester des composés de synthèse, les contenants où se charge l'air en odeur sont des bocaux de verre équipés de bouchons hermétiques et de bras en verre pour la connexion aux tubes acheminant les flux **(****Figures 2A et 2B****).** Les substances à tester sont placées dans de petits flacons en verre équipés d'un bouchon en caoutchouc traversé par un capillaire qui permet de réguler l'émission des molécules volatiles. Ces flacons sont insérés dans les bocaux de manière à diffuser les composés volatils dans l'enceinte formée par chaque bocal **(****Figure 2A****).**

Les inventeurs ont aussi testé les odeurs émises par des poules vivantes en remplaçant les bocaux par des boîtes de Plexiglas® spécialement conçues pour cet usage (production d'un « headspace » traversé par l'air propulsé dans les branches), conçues pour recevoir une poule chacune, et équipées d'entrées et de sorties adaptées à la connexion aux tubes acheminant les flux **(****Figure 3****).**

Pour des raisons de standardisation du test, seules des femelles de *Dermanyssus gallinae* adultes et à jeun (dernier repas datant d'au moins 4 jours) ont été utilisées pour réaliser les tests de comportement. Le jeûne permet de maximiser les chances de tester un individu réactif : en effet, des auteurs ont montré que le niveau de réactivité vis-à-vis de stimuli physiques diminuait fortement durant les 2 jours suivant le repas. L'acarien est introduit individuellement dans l'ouverture de la branche basale du Y où il est convaincu de demeurer grâce à une résistance chauffante placée sous l'olfactomètre qui maintient une température constante et « intéressante » dans l'olfactomètre. Quand un individu s'est engagé dans une branche de l'olfactomètre et en a atteint le bout, on considère qu'il a choisi l'odeur émise dans cette branche. Les individus qui ressortent de l'olfactomètre (marche arrière) et ceux qui demeurent dans la zone centrale (au carrefour des trois branches) jusqu'à 10 minutes sont classés comme « non choix ». Des tests entièrement à blanc (sans flacon contenant des composés volatils dans aucun des récipients) ont été intercalés régulièrement de manière à s'assurer que l'on obtenait bien une répartition proche de 50/50 entre les deux branches en l'absence des composés testés et à estimer le nombre « normal » de non choix chez cette espèces (peut varier fortement entre espèces).

Des tests binomiaux ont été réalisés sur la distribution des individus dans les branches des tubes en Y pour voir si cette distribution différait significativement d'une distribution 50:50 (neutralité) et si oui, s'il y avait plutôt attraction (répartition significativement > ½ du côté du composé ou du cocktail proposé), répulsion (répartition significativement < ½ du côté du composé ou du cocktail proposé) (et ce indépendamment du côté physique grâce à l'interversion des connexions au cours des tests).

### Principaux résultats

### - Caractérisation des odeurs de poules et sélection des composés du cocktail

L'interprétation des chromatogrammes a permis l'identification de 31 composés en tout, dont 8 apparaissent systématiquement dans les odeurs de poule et sont donc considérés comme caractéristiques de ces odeurs. La **Figure 7** est un exemple de profil d'odeur obtenu au cours de l'étude à partir d'un individu. Parmi eux, les aires sous pic présentent des variations conséquentes.

Les quatre premiers composés ont été sélectionnés au vu de leur occurrence systématique et de leur abondance relative supérieure aux autres dans les chromatogrammes : (*E*)-non-2-enal, acide nonanoïque, octanal, nonanal. Deux composés supplémentaires, l'oct-1-en-3-ol et l'acide octanoïque, ont été sélectionnés sur la base de leur présence dans les chromatogrammes et de leur caractère attractif démontré vis-à-vis d'autres acariens dans la littérature.

**Tableau 1 : Abondances relatives moyennes dans les odeurs de poules des composés retenus pour l'assemblage (sur la base des aires sous pics).**

| Composé | Abondances relatives moyennes dans les échantillons (en %) | Occurrence du composé sur 9 poules testées |
|---|---|---|
| (E)-non-2-enal | 6,6 | 9 |
| acide nonanoïque | 1,7 | 7 |
| octanal | 0,2 | 8 |
| nonanal | 69,3 | 9 |
| oct-1-en-3-ol | 0,4 | 5 |
| acide octanoïque | 0,1 | 1 |

Les formes synthétiques de chacun de ces composés (liquides) achetées chez Sigma-Aldrich ont été assemblées en mélange équivolumique (cf. Tableau 2 ci-après). Chaque cocktail et chaque composé individuel à tester est rendu disponible dans les flacons équipés de capillaires à raison de 20 µL par flacon.

**Tableau 2 : Masses des différents composés dans les cocktails équivolumiques à base de 6 composés (première composition retenue sur la base des abondances dans les odeurs des poules) et le cocktail 5 composés (composition retenue au final suite à la mise en évidence d'une absence d'effet de l'ajout du sixième composé - voir résultats)**

| | Composé | Masse (en g) |
|---|---|---|
| Cocktail 6-composés (mix 5.0) (volume final 3 mL) | (*E*)-non-2-enal | 0,423 |
| | acide nonanoïque | 0,453 |
| | octanal | 0,410 |
| | nonanal | 0,414 |
| | oct-1-en-3-ol | 0,415 |
| | acide octanoïque | 0,45 |
| Cocktail 5-composés (mix10) (volume final 2,5 mL) | (*E*)-non-2-enal | 0,423 |
| | acide nonanoïque | 0,453 |
| | octanal | 0,410 |
| | nonanal | 0,414 |
| | oct-1-en-3-ol | 0,415 |

### - Réponse de l'acarien aux molécules individuelles et en cocktail

Les tests à blanc (absence de composés volatils dans les bocaux) montrent une répartition qui ne s'écarte pas de la répartition aléatoire attendue 50/50 (p=0,75 ; nombre d'individus testés : n=50), ce qui valide bien le dispositif des inventeurs appliqué à l'acarien *D. gallinae* (n=50). Le pourcentage de non choix dans ces conditions est de 18%.

Parmi les composés individuels, seul l'acide octanoïque pourrait sembler légèrement attractif (davantage d'acariens vont vers le côté connecté au récipient le contenant), mais cela n'est pas significatif selon le test binomial **(****Figure 4****).** Lorsque l'on présente les 6 composés assemblés à l'acarien, il est attiré significativement vers ce bouquet d'odeur **(****Figure 5****).** Lorsque l'on présente ce cocktail réduit d'un composés (5 des 6 composés, tests réalisés sur les 6 combinaisons possibles), l'attractivité disparaît, sauf lorsque le composé retranché est l'acide octanoïque **(****Figure 5****).**

Pour confirmer que l'attractivité des cocktails est bien du même ordre que celle exercée par une poule, le système mettant en œuvre des boîtes de plexiglas contenant une poule a été appliqué pour tester l'attractivité de deux souches de poules différentes : Isa Warren et White Leghorn (EOPS). Un total de 50 individus de *D. gallinae* a été testé par souche de poules. Pour cette partie de l'étude, deux souches de poules pondeuses ont été utilisées âgées d'environ 1 an (c'est-à-dire entre 1 et 2 mois avant la fin d'une bande en élevage de pondeuses) : 6 Isa Warren (Souche 1) et 6 White Leghorn EOPS (Souche 2). D'après les résultats des tests de comportement, *D. gallinae* est bien attiré par la poule, quelle que soit la souche **(****Figure 6****).** L'attraction de *D. gallinae* ne diffère pas significativement entre les poules des deux souches utilisées dans la présente étude (Chi² = 0,71 ; df = 1 ; p-value = 0,4) et les pourcentages d'individus ayant choisi une poule ou un cocktail synthétique sont du même ordre de grandeur (70,6 et 79,4% pour les poules, 70,4% pour le cocktail 6 composés (MIX5.0) et 75,9% pour le cocktail 5 composés (MIX1.0)).

### Principales conclusions

Parmi les composés typiques des odeurs de poules, 5 composés assemblés, parmi les huit composés détectés de manière récurrente dans les odeurs de poules (dont 4 bien représentés et un beaucoup moins), suffisent à induire chez l'acarien *D. gallinae* un comportement d'attraction comparable à celui induit par la poule elle-même.

Les cocktails 6-composés (mix 5.0) et 5-composés (mix1.0) retenus dans la présente étude (voir composition dans le tableau 1) sont tous deux significativement attractifs, mais au sein du cocktail 6-composés (mix 5.0), l'acide octanoïque n'est pas nécessaire à l'attraction. En revanche, les cinq autres composés (les composés du mix 10) semblent bien nécessaires à l'attraction (puisqu'aucune des autres combinaisons de 5 composés ni aucun des composés individuels ne sont significativement attractifs). Ils agissent en synergie.

### Exemple 2 : Attraction Ornithonyssus sylviarum

Des tests similaires à ceux réalisés avec *D. gallinae* ont également été effectués avec *O. sylvarum.*

Les tests d'attraction ont été réalisés dans les mêmes conditions, ou des conditions similaires, que celles décrites dans l'exemple 1.

### Exemple 3 : évaluation de l'effet des changements de proportion et identification d'autres composés intéressants

L'analyse approfondie des chromatogrammes issus de l'étude de l'exemple 1 a permis d'identifier trois composés supplémentaires à tester en combinaison avec les 5 molécules du cocktail : 1-octanol, 1-nonanol et 2-octanone. Le choix de ces composés parmi les différents composés recensés dans les chromatogrammes obtenus au cours de l'étude initiale est fondé, comme pour les 5 retenus initialement, sur les proportions et fréquences naturelles observées, le caractère attractif de ces trois composés pour d'autres espèces d'acariens rapportés dans la littérature scientifique et leur nature de dérivé d'acide gras, qui les rapproche des autres composés du cocktail initial.

### Résultats

Le mix 1.0 est le cocktail initial (5 molécules, en proportions équivolumiques). Lorsque l'on présente les cocktails dérivés du mix 1.0, avec un des 5 composés présent en proportion dix fois supérieure aux 4 autres (les mix1.2, mix1.3, mix1.4 et mix1.5) ou en proportion dix fois inférieure aux quatre autres (le mix1.1.1), la proportion d'acariens qui choisissent le cocktail plutôt que le témoin est toujours supérieurs à 50%, excepté pour le mix1.1.1 **(****Figure 8****).** Cependant, parmi ces cocktails, seul le mix1.2 ((*E*)-2-nonenal majoritaire) est significativement plus choisi que le témoin.

Note : mix 1.0 : B sur la figure 8 ; mix 1.1.1 : C sur la figure 8, mix 1.2 : D sur la figure 8, mix 1.3 : E sur la figure 8, mix 1.4 : F sur la figure 8 et mix 1.5 : G sur la figure 8.

Les tests réalisés avec le mix1.0 auxquels on a ajouté trois composés additionnels présents dans les odeurs de poules (mix 1.0 étendu : 5 composés initiaux + 1-octanol, 1-nonanol et 2-octanone, représentant chacun de 1 à 4% en abondance relative moyenne) montrent une activité significative **(****Figure 9****).** Quand les 5 composés du mix1.0 sont mélangés dans les proportions qui correspondent à leur abondance moyenne relative observée dans les odeurs de poules (mix 1.0 prop), les acariens ne fréquentent pas davantage la branche du témoin que celle du mix **(****Figure 9****).** La version equivolumique du cocktail reste donc plus attractive pour *D. gallinae* que la version tentant de mimer plus fidèlement la partie ciblée de l'odeur de poule. L'ajout de composés supplémentaires ne modifie pas l'attractivité du mix1.0.

L'utilisation d'une conformation différente de l'1-octen-3-ol (le S-1-octen-3-ol remplaçant le R-1-octen-3-ol) dans les cocktails mix1.0 et mix1.2 a révélé que la proportion d'acariens à choisir le cocktail plutôt que le témoin était supérieur à 50%, mais cela demeure non significatif selon le test binomial **(****Figure 10****).** L'attraction de ces deux cocktails semble donc légèrement diminuée par le changement de conformation de l'1-octen-3-ol par rapport à leur version initiale.

En résumé, si l'on considère les formules au pouvoir attractif soutenu par des différences significatives selon le test binomial, elles sont au nombre de trois en tout :
- le mix 1.0, cocktail de 5 molécules en proportions équivolumiques (A sur la figure 8),
- le mix 1.2, composé des mêmes molécules que le mix 1.0, mais en proportions non équivolumiques ((*E*)-2-nonenal majoritaire),
- le mix 1.0 étendu, composé des mêmes molécules additionnées des trois nouvelles molécules identifiées au cours de la tâche 1-A-1, en proportions équivolumiques.

De manière à déterminer si parmi ces trois formules, des différences significatives du pouvoir attractif pouvaient être établies, nous avons réalisé des tests de chi-deux de contingence à partir des données obtenues sur les individus ayant réalisé un choix au cours des tests (opposant systématiquement le cocktail considéré et un témoin). Le pouvoir attractif de ces trois formules semble sensiblement identique (chi-deux = 40,2, dl=2, p>0,995). Si l'on considère le pourcentage de non choix, il semblerait cependant légèrement inférieur avec le cocktail 1.2 comparé aux deux autres (19% vs >30% pour les deux autres). Cela suggère un éventuel potentiel accru du mix 1.2 comparé aux deux autres.

Notons que la proportion d'individus ne réalisant pas de choix au cours de cette expérience est plus élevée que lors des tests précédents (>15% contre <5% de non choix avec le mix 1.0). Cela s'explique par le fait que nous avons fait le choix de travailler sur des acariens fraîchement et régulièrement prélevés sur le terrain, et par conséquent exposés à des durées de jeûne plus réduites que lors des tests précédents. La proportion de non choix, plus élevée, est représentative de comportements plus proches de ceux que les poules rencontrent sur le terrain.

### Conclusions générales sur la composition du cocktail

Les combinaisons et proportions testées au cours des analyses ont essentiellement permis d'identifier deux compositions au pouvoir attractif similaire à celui initialement retenu. Les autres modifications du cocktail, dans la plupart des cas tendent à faire diminuer le pouvoir attractif, mais ne semblent pas aboutir à une perte complète de cet activité : en effet, les tendances demeurent généralement en faveur d'un effet attractif résiduel, qui s'avère non significatif selon les résultats du test binomial, mais la proportion d'acariens choisissant le cocktail plutôt que le témoin demeure bien supérieure à 50%.

L'invention n'est pas limitée aux modes de réalisation présentés et d'autres modes de réalisation apparaîtront clairement à l'homme du métier.

## Revendications

1. Composition comprenant à titre de substance active un mélange des composés suivants :
le (*E*)-non-2-enal, de formule I suivante : 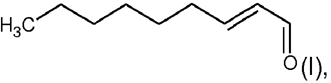
l'acide nonanoïque, de formule II suivante : 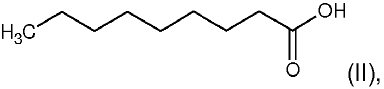
l'octanal, de formule III suivante : 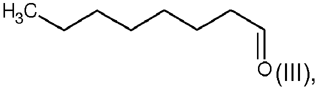
le nonanal, de formule IV suivante : 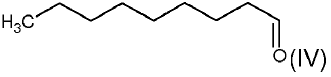 et
le oct-1-en-3-ol, de formule V suivante :

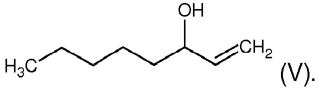

2. Composition selon la revendication 1, comprenant en outre de l'acide octanoïque de formule VI suivante :

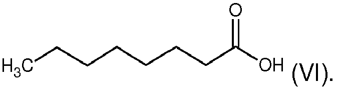

3. Composition selon la revendication 1 ou 2, comprenant en outre l'un au moins des composés suivants :
le 1-octanol, de formule VI suivante : 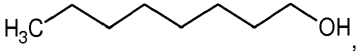
le 1-nonanol de formule VII suivante : 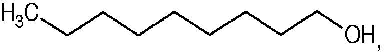 et
le 2-octanone de formule VIII suivante :

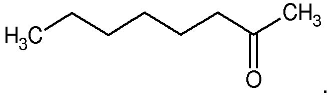

4. Composition selon l'une quelconque des revendications 1 ou 3, comprenant les composés de formule I à VIII, de formule suivante :
le (*E*)-non-2-enal, de formule I suivante : 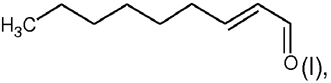
l'acide nonanoïque, de formule II suivante : 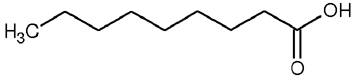 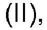
l'octanal, de formule III suivante : 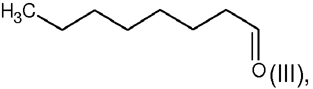
le nonanal, de formule IV suivante : 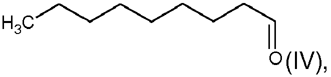
le oct-1-en-3-ol, de formule V suivante : 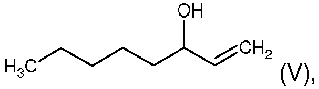
le 1-octanol, de formule VI suivante : 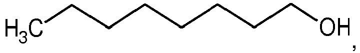
le 1-nonanol de formule VII suivante : 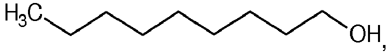 et
le 2-octanone de formule VIII suivante :

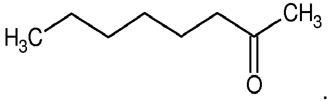

5. Utilisation d'une composition selon l'une quelconque des revendications 1 à 4, pour la décontamination, ou la prévention de la contamination des élevages d'oiseaux par des acariens, ou encore la surveillance continue des élevages d'oiseaux susceptibles d'être infectés par les acariens.

6. Utilisation selon la revendication 5, dans laquelle lesdits oiseaux sont des gallinacés, notamment lesdits oiseaux sont des poules.

7. Utilisation selon la revendication 5 ou la revendication 6, ou lesdits acariens sont des acariens communément appelés poux, notamment poux rouges, poux gris ou poux noirs.

8. Utilisation selon la revendication 7, où lesdits poux sont choisis parmi les espèces suivantes *Dermanyssus gallinae* et *Ornithonyssus sylviarum.*

9. Méthode de détection de l'infestation d'un élevage d'oiseaux par des acariens, comprenant une étape de mise en contact d'une composition telle que définie à l'une quelconque des revendications 1 à 4 avec l'atmosphère environnante, et une étape de détermination de la présence, de l'absence ou du nombre d'acarien présent dans le dispositif utilisé.

10. Dispositif comprenant des moyens permettant la mise en contact d'une composition telle que définie à l'une quelconque des revendications 1 à 4 avec l'atmosphère environnante, et des moyens permettant de capturer et/ou tuer des acariens.

11. Dispositif selon la revendication 10, dans lequel les moyens permettant de capturer sont des récipients anti évasion ou des surfaces adhésives ou gluantes, et où lesdits moyens permettant de tuer les acariens sont des composés chimiques ou des organismes prédateurs ou parasites desdits acariens.

12. Méthode de prévention de l'infestation d'élevages d'oiseaux par des acariens, ou de décontamination des élevages d'oiseaux infectés par des acariens, comprenant une étape d'installation, au sein desdits élevages, de dispositifs tels que définis dans l'une quelconque des revendications 10 ou 11.

## Patentansprüche

1. Zusammensetzung, umfassend als aktive Substanz eine Mischung der folgenden Verbindungen:
(*E*)-non-2-enal der folgenden Formel I: 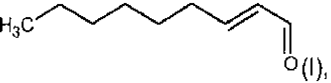
Nonansäure der folgenden Formel II: 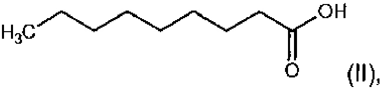
Octanal der folgenden Formel III: 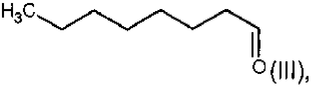
Nonanal der folgenden Formel IV: 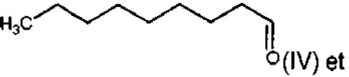
oct-1-en-3-ol der folgenden Formel V:

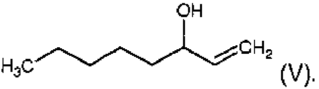

2. Zusammensetzung nach Anspruch 1, ferner umfassend Octansäure der folgenden Formel VI:

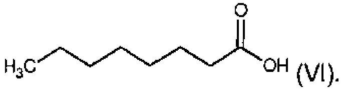

3. Zusammensetzung nach Anspruch 1 oder 2, ferner umfassend mindestens eine der folgenden Verbindungen:
1-Octanol der folgenden Formel VI: 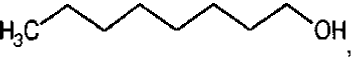
1-Nonanol der folgenden Formel VII: 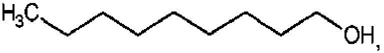 et
2-Octanon der folgenden Formel VIII:

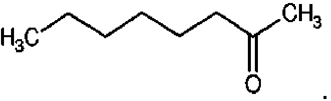

4. Zusammensetzung nach einem der Ansprüche 1 oder 3, umfassend die Verbindungen der Formel I bis VIII, der folgenden Formel:
(*E*)-non-2-enal der folgenden Formel I: 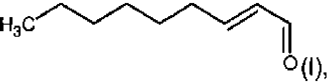
Nonansäure der folgenden Formel II: 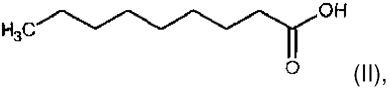
Octanal der folgenden Formel III: 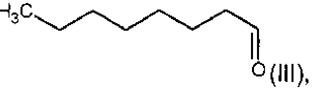
Nonanal der folgenden Formel IV: 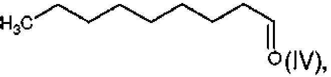
oct-1-en-3-ol der folgenden Formel V: 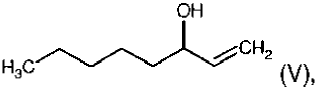
1-Octanol der folgenden Formel VI: 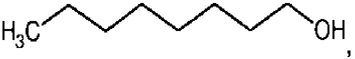
1-Nonanol folgenden Formel VII: und 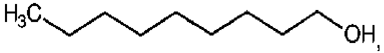
2-Octanon der folgenden Formel VIII:

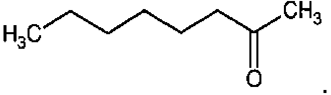

5. Verwendung einer Zusammensetzung nach einem der Ansprüche 1 bis 4 zur Dekontaminierung oder Verhinderung der Kontamination von Vogelfarmen durch Milben oder zur kontinuierlichen Überwachung von Vogelfarmen, die für Milbenbefall anfällig sind.

6. Verwendung nach Anspruch 5, wobei die Vögel Gallinaceen sind, insbesondere die Vögel Hühner sind.

7. Verwendung nach Anspruch 5 oder Anspruch 6, wobei die Milben allgemein als Läuse bezeichnete Milben, insbesondere rote Läuse, graue Läuse oder schwarze Läuse sind.

8. Verwendung nach Anspruch 7, wobei die Läuse aus den folgenden Arten *Dermanyssus gallinae* und *Ornithonyssus sylviarum* ausgewählt sind.

9. Verfahren zum Erkennen des Befalls einer Vogelfarm durch Milben, umfassend einen Schritt des Inkontaktbringens einer Zusammensetzung nach einem der Ansprüche 1 bis 4 mit der umgebenden Atmosphäre und einen Schritt des Bestimmens des Vorhandenseins, der Abwesenheit oder der Anzahl der in der verwendeten Vorrichtung vorhandenen Milben.

10. Vorrichtung, umfassend Mittel zum Inkontaktbringen einer Zusammensetzung nach einem der Ansprüche 1 bis 4 mit der Umgebungsatmosphäre und Mittel zum Einfangen und/oder Abtöten von Milben.

11. Vorrichtung nach Anspruch 10, wobei die Mittel zum Einfangen Fluchtschutzbehälter oder klebende oder klebrige Oberflächen sind, und die Mittel zum Abtöten von Milben chemische Verbindungen oder räuberische oder parasitäre Organismen der Milben sind.

12. Verfahren zum Verhindern des Befalls von Vogelfarmen durch Milben oder zum Dekontaminieren von Vogelfarmen, die mit Milben infiziert sind, umfassend einen Schritt des Installierens von Vorrichtungen, wie in einem der Ansprüche 10 oder 11 definiert, innerhalb der Farmen.

## Claims

1. Composition comprising, as an active substance, a mixture of the following compounds:
(*E*)-non-2-enal, of the following formula I: 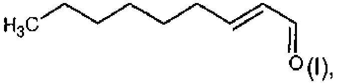
nonanoic acid, of the following formula II: 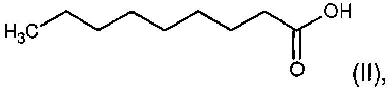
octanal, of the following formula III: 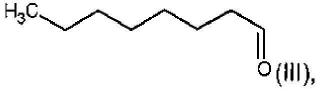
nonanal, of the following formula IV: 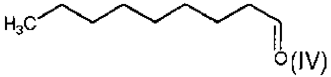 and
oct-1-en-3-ol, of the following formula V:

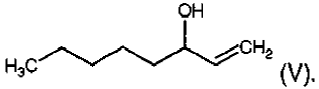

2. Composition according to claim 1, further comprising octanoic acid of the following formula VI:

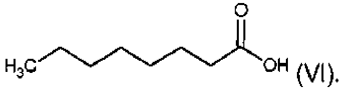

3. Composition according to either claim 1 or claim 2, further comprising at least one of the following compounds:
1-octanol, of the following formula VI: 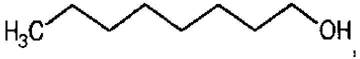
1-nonanol of the following formula VII: 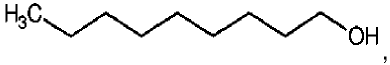 and
2-octanone of the following formula VIII:

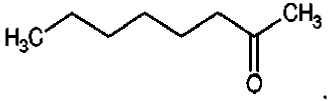

4. Composition according to either claim 1 or claim 3, comprising the compounds of formula I to VIII, of the following formula:
(*E*)-non-2-enal, of the following formula I: 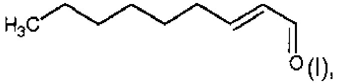
nonanoic acid, of the following formula II: 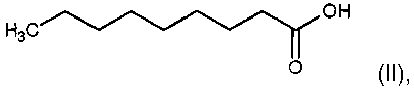
octanal, of the following formula III: 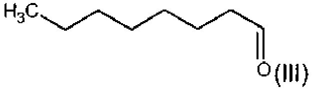
nonanal, of the following formula IV: 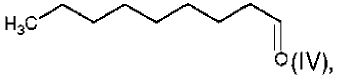
oct-1-en-3-ol, of the following formula V: 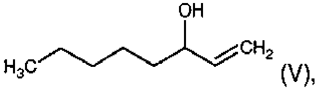
1-octanol, of the following formula VI: 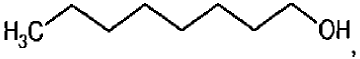
1-nonanol of the following formula VII: 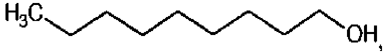 and
2-octanone of the following formula VIII:

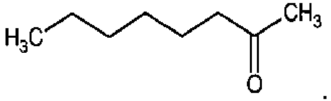

5. Use of a composition according to any of claims 1 to 4, for decontaminating or preventing the contamination of bird farms by mites, or for continuously monitoring bird farms likely to be infected by mites.

6. Use according to claim 5, wherein said birds are gallinaceous, in particular said birds are chickens.

7. Use according to either claim 5 or claim 6, wherein said mites are mites commonly called lice, in particular red lice, gray lice or black lice.

8. Use according to claim 7, wherein said lice are selected from the following species: *Dermanyssus gallinae* and *Ornithonyssus sylviarum.*

9. Method for detecting infestation of a bird farm by mites, comprising a step of bringing a composition as defined in any of claims 1 to 4 into contact with the surrounding atmosphere, and a step of determining the presence, absence or number of mites present in the device used.

10. Device comprising means which make it possible to bring a composition as defined in any of claims 1 to 4 into contact with the surrounding atmosphere, and means which make it possible to capture and/or kill mites.

11. Device according to claim 10, wherein the capturing means are anti-escape containers or adhesive or sticky surfaces, and wherein said means for killing mites are chemical compounds or organisms which predate on or parasitize said mites.

12. Method for preventing the infestation of bird farms by mites, or for decontaminating bird farms infected by mites, comprising a step of installing devices as defined in either claim 10 or claim 11 within said farms.
